# FASCICULE DE BREVET EUROPEEN

(11) **EP 2 864 083 B1**
(45) Date de publication et mention de la délivrance du brevet: **12.10.2016**
(21) Numéro de dépôt: 13731106.4
(22) Date de dépôt: 19.06.2013
(51) Int. Cl.: B25J 9/16

(54) **PLATEFORME DE SIMULATION POUR LA VALIDATION D'UNE ARCHITECTURE LOGICIELLE ET MATÉRIELLE D'UN ROBOT**
SIMULATIONSPLATTFORM ZUR VALIDIERUNG EINER SOFTWARE UND DER MATERIALARCHITEKTUR EINES ROBOTERS
SIMULATION PLATFORM FOR VALIDATING A SOFTWARE AND MATERIAL ARCHITECTURE OF A ROBOT

(30) Priorité: 20.06.2012 FR 1255805
(43) Date de publication de la demande: 29.04.2015
(73) Titulaire: Université Blaise Pascal - CLERMONT II, 63006 Clermont-Ferrand Cedex 1 (FR); Centre National de la Recherche Scientifique (CNRS), 75016 Paris (FR); Institut National de Recherche en Sciences et Technologies pour l'Environnement et l'Agriculture, 92160 Antony (FR)
(72) Inventeur: DEBAIN, Christophe, F-63450 Saint Saturnin (FR); MALARTRE, Florent, F-63000 Clermont Ferrand (FR); DELMAS, Pierre, F-63000 Clermont Ferrand (FR); CHAPUIS, Roland, F-63500 Issoire (FR)
(74) Mandataire: Lavoix
(86) Numéro de dépôt international: PCT/EP2013/062765
(87) Numéro de publication internationale: WO 2013/189994

(56) Documents cités:
- DE-A1-102006 036 490
- US-A1- 2008 114 492
- US-B1- 6 330 495

## Description

La présente invention concerne une plateforme de simulation pour la validation d'une architecture logicielle et matérielle d'un robot.

Dans ce qui suit, par architecture matérielle et logicielle d'un robot, on entend un système implanté à bord du robot et constitué d'une couche matérielle comportant un calculateur, un ou plusieurs capteurs et un ou plusieurs actionneurs, et d'une couche logicielle comportant un algorithme dont les instructions sont mémorisées dans le calculateur afin d'être exécutées par ce dernier.

Le cycle de développement de l'architecture d'un robot nécessite, en particulier à chaque nouvelle version de l'algorithme exécuté par le calculateur, une étape de validation, au moyen de tests en situation.

Au cours d'un test, l'algorithme est exécuté par le calculateur implanté sur le robot alors que celui-ci est placé dans un environnement réel. Cet environnement réel est constitué, par exemple dans le cas d'un robot mobile, d'un circuit comportant une piste d'essai le long de laquelle ont été disposés des obstacles. Cette configuration a pour objectif de tester une fonctionnalité particulière du robot. Les différentes données caractéristiques du comportement du robot lors de l'exécution par le calculateur de l'algorithme sont collectées soit par des capteurs embarqués (qu'il s'agisse de capteurs natifs du robot ou de capteurs additionnels dont est spécifiquement équipé le robot lors du test), soit par des capteurs placés dans l'environnement (caméra d'observation par exemple).

A l'issue des tests, les différentes données collectées sont rapatriées sur une station de travail, puis synchronisées spatialement et temporellement, avant d'être analysées dans le but d'évaluer les performances de l'architecture à valider.

Cette étape de validation en situation requiert un temps de mise en oeuvre important notamment pour équiper le robot de capteurs supplémentaires pour la collecte de données spécifiques permettant la validation de l'architecture à valider, pour déplacer le robot équipé sur le site de test, pour préparer un environnement adapté, pour le déroulement des tests, et pour le rapatriement et la synchronisation a posteriori des données collectées en vue de leur analyse.

De plus, un test permet en général d'évaluer les performances de l'architecture à valider selon un unique scénario préétabli, l'environnement étant alors préparé en fonction de ce scénario. Il faut alors multiplier les tests, en introduisant des conditions expérimentales différentes (telles que la modification du glissement entre les roues du robot et le sol, la modification de l'éclairage ambiant, etc.), si l'on souhaite tester de manière exhaustive le comportement du robot et, en particulier, les différentes fonctionnalités de l'architecture à valider. Ceci est non seulement long, mais n'est pas toujours possible. En effet, certaines fonctionnalités peuvent ne pas être testées, car l'environnement réel nécessaire à cette validation serait trop complexe ou coûteux à réaliser comme décrit dans le document DE 10 2006 036 490 A1.

Il y a donc un besoin pour simplifier cette étape de validation de l'architecture logicielle et matérielle d'un robot, tout en améliorant le niveau de validation.

L'invention a donc pour but de répondre au problème précité.

Pour cela l'invention a pour objet une plateforme de simulation pour la validation d'un dispositif comportant un calculateur programmé pour exécuter un algorithme, ledit dispositif étant destiné à être embarqué à bord d'un robot et à être connecté à un capteur du robot pour recevoir un signal de mesure et à un actionneur du robot pour lui transmettre un signal de commande, la plateforme étant destinée à être connectée au calculateur et comportant un moyen de calcul propre à exécuter les instructions d'un programme de simulation comportant :
- un module de configuration d'un environnement en trois dimensions, pour créer un environnement virtuel en trois dimensions ;
- un module de simulation d'une réponse du capteur du robot, conçu pour générer des données de sortie correspondant à des signaux de mesure simulés, à partir d'une modélisation du comportement du capteur du robot et de données d'entrée constituées par l'environnement virtuel créé et par des grandeurs cinématiques calculées du robot, lesdits signaux dé mesure simulés étant appliqués en entrée du calculateur du dispositif ;
- un module de simulation d'une dynamique du robot, conçu pour calculer des grandeurs cinématiques du robot, à partir d'une modélisation de l'actionneur du robot et de données d'entrée correspondant à des paramètres dynamiques caractéristiques du robot, aux signaux de commande émis par le calculateur du dispositif et à l'environnement virtuel créé,
caractérisée en ce que le programme de simulation comporte, en outre, un module d'ordonnancement temporel comportant :
- une horloge logique délivrant l'instant logique courant ;
- un schéma d'ordonnancement, associant à chaque instant logique un ensemble d'actions à réaliser ;
- un sous-module d'appel d'une action de simulation propre à lancer, à l'instant logique courant délivré par l'horloge logique et en fonction de l'ensemble des actions associées à cet instant logique courant par le schéma d'ordonnancement, la réalisation d'une action de simulation correspondant à l'exécution du module de simulation de la réponse du capteur ou du module de simulation d'une dynamique du robot ; et,
- un sous-module d'appel d'une action de réaction du robot, propre à lancer, à l'instant logique courant délivré par l'horloge logique et en fonction de l'ensemble des actions associées à cet instant logique courant par le schéma d'ordonnancement, la réalisation d'une action de réponse du robot correspondant au traitement par le calculateur du dispositif de signaux de mesure simulés appliquées en entrée du calculateur à l'instant logique courant, pour la génération de signaux de commande à l'instant logique courant.

Suivant les modes particuliers de réalisation, la plateforme comporte une ou plusieurs des caractéristiques suivantes, prise(s) isolément ou suivant toutes les combinaisons techniquement possibles :
- un sous-module de simulation de l'actionneur du robot, comportant une modélisation de l'actionneur du robot ; et,
- un sous-module de calcul des grandeurs cinématiques et dynamiques propre à calculer des grandeurs cinématiques et dynamiques du robot à l'instant logique courant à partir des données en sortie du module de simulation de la réponse de l'actionneur du robot et des grandeurs cinématiques et dynamiques du robot à l'instant précédent ;
- le sous-module d'appel est propre à émettre un signal de contrôle adapté à destination du calculateur du dispositif, de manière à synchroniser l'horloge du calculateur afin de cadencer l'exécution de l'algorithme ;
- une interface d'entrée/sortie adaptée afin de permettre la connexion de ladite plateforme à une pluralité de dispositif à valider, chaque dispositif étant destiné à être embarqué dans un robot correspondant, la plateforme comportant, associée à chaque dispositif et, par conséquent à chaque robot, une paire de modules constituée d'un module de simulation d'une réponse d'un capteur dudit robot et un module de simulation de la dynamique dudit robot.

L'invention a également pour objet un procédé de simulation pour la validation d'un dispositif comportant un calculateur programmé pour exécuter un algorithme, ledit dispositif étant destiné à être embarqué à bord d'un robot et à être connecté à un capteur du robot pour recevoir un signal de mesure et à un actionneur du robot pour lui transmettre un signal de commande,
caractérisé en ce que, ledit procédé étant mis en oeuvre sur une plateforme de simulation telle que défini au dessus connecté audit calculateur du dispositif, le procédé consiste à :
- créer un environnement virtuel en trois dimensions avec lequel interagit ledit robot ;
- simuler une réponse du capteur du robot pour générer des données de sortie correspondant à des signaux de mesure simulés, à partir d'une modélisation du comportement du capteur du robot et de données d'entrée constituées par l'environnement virtuel créé et par des grandeurs cinématiques calculées du robot, lesdits signaux de mesure simulés étant appliqués en entrée du calculateur du dispositif ;
- simuler une dynamique du robot pour calculer des grandeurs cinématiques du robot, à partir d'une modélisation de l'actionneur du robot et de données d'entrée correspondant à des paramètres dynamiques caractéristiques du robot, aux signaux de commande émis par le calculateur du dispositif et à l'environnement virtuel créé,
- ordonnancer temporellement l'appel à une action en lançant, à l'instant logique courant délivré par une horloge logique et en fonction de l'ensemble des actions associées à cet instant logique courant par un schéma d'ordonnancement, la réalisation d'une action de simulation correspondant à l'exécution du module de simulation de la réponse du capteur ou du module de simulation d'une dynamique du robot ou en lançant, à l'instant logique courant délivré par l'horloge logique et en fonction de l'ensemble des actions associées à cet instant logique courant par le schéma d'ordonnancement, la réalisation d'une action de réponse du robot correspondant au traitement par le calculateur du dispositif de signaux de mesure simulés appliquées en entrée du calculateur à l'instant logique courant, pour la génération de signaux de commande à l'instant logique courant.

Suivant un mode particulier de réalisation :
- l'application en entrée du calculateur d'un signal de mesure simulé dont une date est compatible avec l'instant logique courant ;
- la synchronisation de l'horloge du calculateur régissant l'exécution de l'algorithme par l'émission à l'instant courant d'un signal de commande adapté par la plateforme à destination du calculateur ; et,
- la datation les signaux de commande générés en sortie du calculateur avec une date correspondant à l'instant logique courant augmenté du temps de traitement du calculateur.

D'autres caractéristiques et avantages de l'invention ressortiront plus clairement de la description détaillée qui va suivre, donnée à titre indicatif et nullement limitatif, et faite en se référant aux dessins, dans lesquels :
- la figure 1 est une représentation schématique d'un robot mobile comprenant une architecture logicielle et matérielle ;
- la figure 2 est une représentation sous forme de blocs d'un système comportant une plateforme de simulation et un dispositif à valider faisant partie de l'architecture du robot de la figure 1 ;
- la figure 3 est une représentation schématique du programme de simulation exécuté par la plateforme de la figure 2 ; et,
- la figure 4 est une représentation du procédé de simulation mise en oeuvre lors de l'exécution du programme de simulation de la figure 3.

Dans ce qui suit, le terme « dispositif à valider» désigne le sous-ensemble comportant un calculateur et un algorithme exécuté par le calculateur, destiné à être intégré dans l'architecture matérielle et logicielle du robot.

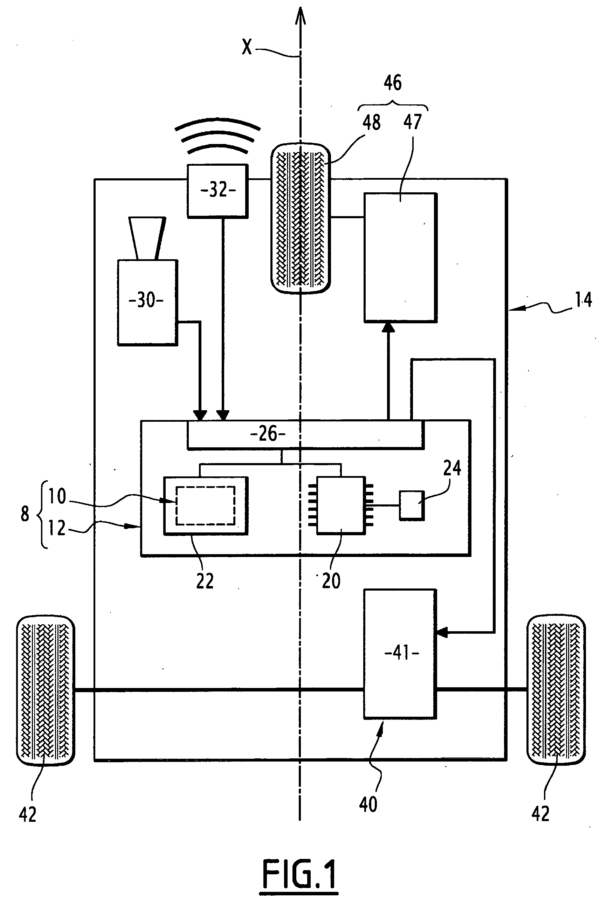

En se référant à la figure 1, l'invention a pour but de faciliter la validation d'un dispositif à valider 8 destiné à être embarqué à bord d'un robot 14.

Dans le mode de réalisation particulier décrit ci-après, le robot 14 est mobile, mais, dans un autre mode de réalisation, pourrait être un bras articulé de manipulation ou de soudure, etc.

Le dispositif 8 consiste en un calculateur 12 programmé pour la mise en oeuvre d'un algorithme 10.

Le calculateur 12 comporte un processeur 20, une mémoire 22, une horloge 24, et une interface d'entrée/sortie 26 pour la connexion du calculateur 12 à des périphériques externes appartenant à la couche matérielle de l'architecture du robot 14.

Les instructions de l'algorithme 10 sont stockées dans la mémoire 22 et sont exécutées par le processeur 20.

Le robot 14 est équipé d'au moins un capteur constituant un périphérique d'entrée propre à appliquer un signal de mesure en entrée de l'interface 26 du calculateur 12.

Dans le présent mode de réalisation, le robot 14 est équipé d'un premier capteur 30 consistant en une caméra fixe par rapport au robot de sorte que son axe optique coïncide avec la direction longitudinale X du robot. Cette caméra est apte à générer périodiquement (c'est-à-dire avec une première période) un premier signal de mesure correspondant à une image en deux dimensions de l'environnement observé. La caméra est caractérisée par un ensemble de paramètres, tels qu'un temps de réponse (séparant l'instant d'incidence d'un rayon lumineux sur l'objectif de la caméra et l'instant d'émission par la caméra du signal de mesure correspondant), une fréquence d'acquisition, une résolution, une plage de longueurs d'onde d'observation, une ouverture du champ d'observation, etc.

Le robot 14 est équipé d'un second capteur 32 consistant en un télémètre laser fixe par rapport au robot, apte à émettre une impulsion laser selon la direction longitudinale X du robot et à collecter l'énergie réfléchie par l'environnement du robot, de manière à générer périodiquement (c'est-à-dire avec une seconde période qui est éventuellement différente de la celle du premier capteur) un signal de mesure correspondant à une distance le long de la direction longitudinal entre le robot et un élément de la scène (tel qu'un obstacle). Le télémètre est caractérisé par un ensemble de seconds paramètres, tels qu'un temps de réponse (séparant l'instant d'émission d'une impulsion laser et la génération du signal de mesure correspondant), une fréquence d'acquisition, une résolution définie comme le pas angulaire entre deux acquisitions successives, une plage de longueurs d'onde d'observation, etc.

Le robot 14 est équipé d'au moins un actionneur constituant un périphérique de sortie et propre à recevoir un signal de commande émis en sortie de l'interface 26 du calculateur 12.

Dans la présente demande, le terme « actionneur » est pris au sens largue. Il regroupe la chaîne électronique de traitement et de régulation permettant, à partir d'un signal de commande de générer un signal de consigne ; les moyens électriques d'alimentation de l'actionneur permettant, à partir du signal de consigne d'appliquer une puissance électrique à des moyens d'entraînement de l'actionneur ; les moyens d'entraînement de l'actionneur permettant, à partir de la puissance électrique appliquée, de générer une puissance mécanique pour le déplacement de pièces mécaniques de l'actionneur ; et les pièces mécaniques de l'actionneur.

Dans le présent mode de réalisation, le robot 14 est équipé d'un premier actionneur 40 consistant en un système de propulsion comportant une paire de roues motrices 42 et un moteur électrique 41 propre à entraîner en rotation les roues 42. Ce premier actionneur est caractérisé par un ensemble de paramètres tels qu'un temps de réponse entre la réception du signal de commande et la modification de la vitesse de rotation des roues.

Le robot 14 est équipé d'un second actionneur 46 consistant en un système de direction comportant une roue directrice 48 et un moteur électrique 47 propre à modifier l'angle du plan de la roue 48 par rapport à la direction longitudinal X du robot. Ce second actionneur est caractérisé par un ensemble de paramètres tels qu'un temps de réponse entre la réception du signal de commande et la modification de l'orientation de la roue directrice 46 par rapport à l'axe longitudinal du robot.

Le calculateur 12 est cadencé par l'horloge 24 à une période de fonctionnement caractéristique, par exemple de 10 ms. C'est-à-dire que toutes les 10 ms, le calculateur 12 traite les premiers et seconds signaux de mesure qui sont appliqués en entrée de l'interface 26 et émet des premiers et seconds signaux de commande en sortie de l'interface 26.

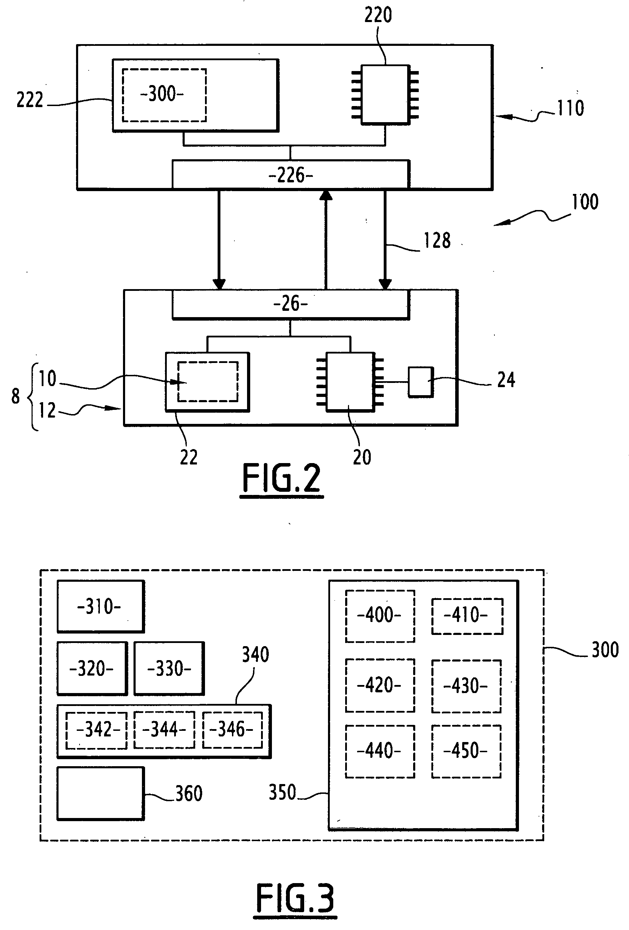

En se référant maintenant à la figure 2, le système de validation 100 comporte une plateforme 110 et le dispositif à valider 8.

De manière générale, la plateforme 110 comporte une couche matérielle et une couche logicielle. La plateforme 110 comporte un moyen de calcul, tels qu'un microprocesseur 220, un moyen de mémorisation, tels qu'une mémoire 222, et une interface d'entrée/sortie 226.

Le microprocesseur 222 est propre à exécuter les instructions d'un programme de simulation 300 qui sont stockées dans la mémoire 222.

Chaque connecteur de l'interface d'entrée/sortie 26 du calculateur 12 est connecté, par une liaison adaptée, à un connecteur conjugué de l'interface d'entrée/sortie 226 de la plateforme 110.

Comme cela sera décrit ci-dessous, la plateforme 110 est propre, en se substituant aux capteurs du robot, à appliquer en entrée du calculateur 12 des signaux de mesure simulés. La plateforme 110 est également propre, en se substituant aux actionneurs du robot, à recevoir en sortie du calculateur 12 les signaux de commande générés par le calculateur 12 et qui résultent du traitement des signaux de mesure simulés.

L'exécution de l'algorithme 10 par le processeur 20 du calculateur 12 est cadencée par un signal d'horloge émis par l'horloge 24. L'émission de ce signal d'horloge est contrôlée par un signal de contrôle généré par la plateforme 110 et appliqué à l'horloge 24 via une liaison de contrôle spécifique, repérée par le chiffre 128 sur la figure 2, entre l'interface 226 et l'interface 26.

Comme représenté schématiquement sur la figure 3, le programme de simulation 300 comporte un module de configuration 310, des premier et second modules, 320 et 330, de simulation de la réponse respectivement des premier et second capteurs 30 et 32, un module de simulation de la dynamique du robot 340 et un module d'ordonnancement temporel 350.

Le module de configuration 310 est conçu pour permettre à un utilisateur de créer un environnement virtuel en trois dimensions à l'intérieur duquel est virtuellement plongé le robot et avec lequel celui-ci interagit virtuellement. Le module 310 permet de créer une représentation graphique en trois dimensions de l'environnement (incluant la texture des éléments, un rendu réaliste des phénomènes d'ombre et d'éblouissement, etc.), ainsi qu'une représentation physique des éléments de l'environnement (coefficient d'adhérence pour une route, dureté pour un obstacle, coefficient de réflexion des ondes du télémètre pour un mur, etc.). Le module 310 est également conçu pour permettre la configuration des modélisations utilisées par chacun des modules et sous-modules de simulation.

Le premier module 320 est propre à simuler la réponse du premier capteur 30. Il est conçu pour générer un premier signal de mesure simulé, à partir d'une modélisation du comportement du premier capteur 30 du robot (modélisation intégrant les différents paramètres caractéristiques du premier capteur) et de données d'entrée constituées par l'environnement virtuel qui a été créé au moyen du module 310 et des grandeurs cinématiques instantanées du robot délivrées par le module 340.

De manière similaire, le second module 330 est propre à simuler la réponse du second capteur 32 du robot. Le module 330 est conçu pour générer un second signal de mesure simulé, à partir d'une modélisation du comportement du second capteur 32 (modélisation intégrant les différents paramètres caractéristiques de ce second capteur) et de données d'entrée constituées par l'environnement virtuel qui a été créé et des grandeurs cinématiques instantanées du robot.

Le module de simulation de la dynamique du robot 340 est propre à simuler le comportement dynamique du robot. Le module 340 est conçu pour calculer les grandeurs cinématiques et dynamiques instantanées du robot. Le module 340 comporte un premier sous-module de simulation de la réponse du premier actionneur 342, un second sous-module de simulation de la réponse du second actionneur 344, et un sous-module 346 de calcul des grandeurs cinématiques et dynamiques.

Le premier sous-module 342 est propre à simuler la réponse du premier actionneur 40 du robot. Le sous-module 342 est conçu pour générer en sortie un premier ensemble de données dynamiques à l'instant courant, à partir d'une modélisation du premier actionneur 40 (modélisation intégrant les différents paramètres caractéristiques de ce premier actionneur), de données d'entrée constituées par l'environnement virtuel qui a été créé au moyen du module 310 et d'un premier signal de commande émis par le calculateur à l'instant courant.

De manière similaire, le second sous-module 344 est propre à simuler la réponse du second actionneur 46 du robot. Le sous-module 344 est conçu pour générer un second ensemble de données dynamiques à l'instant courant, à partir d'une modélisation du second actionneur 46 (modélisation intégrant les différents paramètres caractéristiques de ce second actionneur), de données d'entrée constituées par l'environnement virtuel qui a été créé et d'un second signal de commande émis par le calculateur à l'instant courant.

Le sous-module 346 est propre à calculer les valeurs des grandeurs cinématiques et dynamiques du robot à l'instant courant à partir d'une modélisation de la dynamique du robot et des premiers et seconds ensembles de données dynamiques à l'instant courant délivrés en sortie des premiers et seconds sous-modules de simulation de la réponse d'un actionneur, 342 et 344, et des grandeurs cinématiques et dynamiques du robot à l'instant précédent.

Le programme 300 comporte un module d'ordonnancement temporel 350 propre à gérer toutes les données générées par le module ou sous-module du programme 300 de manière à garantir leur cohérence temporelle afin de simuler l'interaction temps réel entre le robot et l'environnement.

Plus précisément, le module 350 est propre à contrôler l'instant de réalisation d'une action que ce soit une action de simulation, définie comme l'exécution d'un module parmi les modules 320, 330 et 340 de la plateforme 110, ou une action de réaction du robot, définie comme l'exécution de l'algorithme 10 par le calculateur 12 pour le traitement des signaux de mesure.

En particulier, le module 350 est conçu pour dater les données générées lors de la réalisation d'une action.

Pour ce faire, le module d'ordonnancement temporel 350 comporte un schéma d'ordonnancement 400, une horloge logique 410, un sous-module de gestion d'une horloge logique 420, un sous-module de lecture du schéma d'ordonnancement 430, un sous-module d'appel d'une action de simulation 440 et un sous-module d'appel d'une action de réaction du robot 450.

Le schéma d'ordonnancement 400 consiste en un tableau indiquant la chronologie de réalisation des différentes actions. Plus précisément, le schéma 400 associe à chaque instant une liste d'actions à réaliser.

Le pas de temps entre deux instants successifs du schéma d'ordonnancement 400 est inférieur à la période la plus courte caractérisant les différents processus élémentaires mis en oeuvre sur le robot 14. Ce pas de temps du schéma d'ordonnancement est choisi de sorte qu'il existe un nombre multiple entier permettant de passer de ce pas de temps à chacune des fréquences de répétition. Par exemple, si la période caractéristique de fonctionnement du calculateur 12 du robot est de 10 ms, le temps de réponse du premier capteur 30 est de 5 ms avec une période de répétition de 10 ms, le temps de réponse du second capteur 32 de 20 ms avec une période de répétition de 20 ms, le temps de réponse du première actionneurs 40 de 5 ms et le temps de réponse du second actionneur 46 de 4 ms, le pas de temps du schéma d'ordonnancement sera par exemple choisi à 1 ms.

Une horloge logique 410 est une variable entière. Chaque unité de l'horloge logique correspond à un instant du schéma d'ordonnancement 400. La valeur courante de l'horloge logique donne l'instant logique courant.

Le sous-module de gestion de l'horloge logique 420 est conçu pour incrémenter l'horloge logique 410 d'une unité. Le sous-module 420 est appelé lorsque toutes les actions associées dans le schéma 400 à l'instant logique courant ont été réalisées. Après que l'horloge a été incrémentée d'une unité, le sous-module de gestion 420 est propre à appeler le sous-module de lecture 430.

Le sous-module de lecture 430 est conçu pour lire l'instant logique courant, délivré par l'horloge logique 410, puis pour lire le schéma d'ordonnancement 400 pour déterminer les actions à exécuter à l'instant logique courant.

Si l'action est une action de simulation correspondant à l'exécution d'un module de la plateforme 110, le sous-module de lecture 430 lance le sous-module d'appel d'une action de simulation 440 en lui indiquant le module de simulation à exécuter.

En revanche, si l'action est une action de réaction du robot, correspondant à l'exécution de l'algorithme 10 par le calculateur 12, le sous-module de lecture 430 lance le sous-module d'appel à une action de réaction du robot 450.

Le sous-module d'appel d'une action de simulation 440 est propre à lancer l'exécution du module de simulation qui lui est indiqué. Le sous-module 440 applique en entrée du module de simulation requis, des données d'entrée dont la date est compatible avec l'instant logique courant.

A l'issue de l'exécution du module de simulation requis, le sous-module 440 est propre à dater les données générées en sortie du module de simulation requis, avec une date correspondant à l'instant logique courant.

Les données datées sont stockées dans la mémoire 222 de la plateforme 110 pour une utilisation ultérieure en tant que données d'entrée d'un autre module de simulation ou de l'algorithme 10.

Le sous-module d'appel à une action de réaction du robot 450 est conçu pour appliquer sur l'interface 26 du calculateur 12, des signaux de mesure simulés qui ont été générés par les modules de simulation de la réponse des capteurs, 320, 330, et dont la date satisfait un critère de compatibilité avec l'instant logique courant.

Ce critère de compatibilité consiste par exemple à un intervalle de temps séparant la date de génération des données de l'instant logique courant, inférieur à une durée prédéterminée. Cette durée prédéterminée correspond à la durée théorique de réalisation du processus simulé par le module de simulation ayant généré les données. Ainsi, pour le module de simulation du premier capteur, cette durée théorique est de 5 ms, pour le module de simulation du second capteur, de 20 ms, etc.

Le sous-module 450 est également propre à synchroniser l'horloge 24 du calculateur 12 pour que celui-ci reprenne l'exécution de l'algorithme 10. Pour cela le sous-module 450 émet un signal de contrôle, via la liaison 128, à destination du calculateur 12 qui reprend alors l'exécution de l'algorithme 10.

L'exécution de l'algorithme 10 conduit au traitement des signaux de mesure qui se trouvent, à l'instant courant, appliqués en entrée de l'interface 26 du calculateur 12 et à la génération de signaux de commande sur la sortie de l'interface 26 du calculateur 12.

A l'issue du traitement des signaux de mesure et à la génération de signaux de commande, le fonctionnement du processeur 22 est suspendu jusqu'à la réception du prochain signal de contrôle, soit après une durée logique de 10 ms.

Le sous-module 450 est propre à dater les données générées en sortie du calculateur 12 avec une date correspondant à l'instant logique courant augmenté de la durée de génération des signaux de commande par le calculateur 12 sur l'interface 26. Cette durée correspond au temps de traitement du calculateur 12 entre la réception des signaux de mesure sur l'interface 26 et l'émission des signaux de commande sur l'interface 26. Les signaux de commande ainsi datés sont stockés dans la mémoire 222 afin de pouvoir être utilisés en tant que données d'entrée par un module de simulation de la réponse d'un actionneur, 342 ou 344.

Avantageusement, le programme de simulation 300 comporte également un module de suivi 360 propre à délivrer, pour chaque instant logique, les données cinématiques et dynamiques du robot, les données provenant de capteurs du robot ou de capteurs virtuels placés dans l'environnement (tels que des caméras paramétrables d'observation de la scène). Le module 360 permet à un utilisateur de suivre le déroulement du test avec un écoulement du temps adapté. En particulier, l'utilisateur peut choisir un déroulement temps réel, le pas de temps entre deux instants logiques successifs étant alors égal au temps d'une horloge réelle.

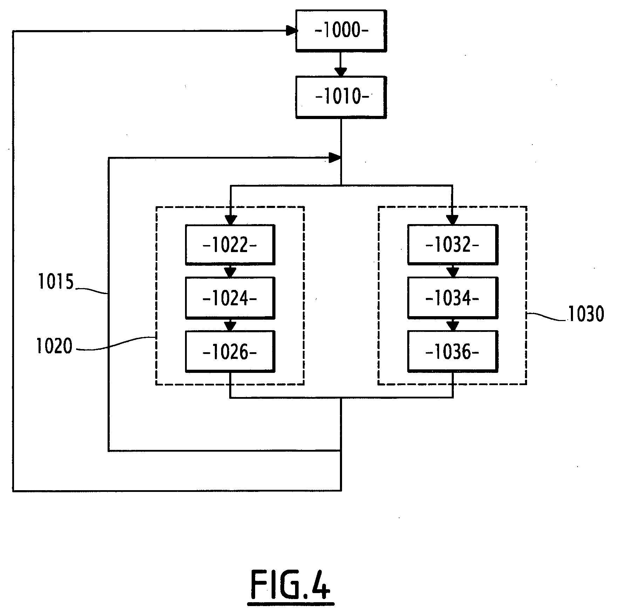

En référence avec la figure 4, le procédé de simulation consiste en la succession des étapes suivantes :

A l'étape 1000 d'incrémentation de l'horloge, le sous-module de gestion de l'horloge logique 420 incrémente l'horloge logique 410 d'une unité puis appelle le sous-module de lecture 430.

A l'étape 1010 de lecture de l'instant logique courant et du schéma d'ordonnancement, le sous-module de lecture 430 lit l'instant logique courant, délivré par l'horloge logique 410, puis lit le schéma d'ordonnancement 400 pour déterminer les différentes actions à réaliser à l'instant logique courant.

Le procédé rentre alors dans une boucle 1015 pour traiter successivement chaque action devant être réalisée à l'instant courant.

Si l'action à réaliser correspond à une action de simulation, le sous-module 440 est lancé en lui indiquant le module de simulation à exécuter.

A l'étape 1020 d'appel d'un module de simulation, le sous-module 440 effectue les étapes élémentaires suivantes :

A l'étape 1022 d'application de données datées, le sous-module 440 applique, en entrée du module de simulation requis, des données dont la date de validité est compatible avec l'instant logique courant.

A l'étape 1024 d'exécution du module indiqué, le sous-module 440 lance l'exécution du module de simulation requis.

A l'étape 1026 de datation des données générées, le sous-module 440 date les données générées en sortie du module de simulation exécuté, avec une date correspondant à l'instant logique courant.

Les données datées sont stockées dans la mémoire 222 de la plateforme 110 pour une utilisation ultérieure en tant que données d'entrée d'un module de simulation ou de l'algorithme 10.

En revanche, si l'action à réaliser correspond à une action de réaction du robot, le sous-module 450 est lancé.

A l'étape 1030 d'exécution de l'algorithme 10, le sous-module 450 effectue les étapes élémentaires suivantes :

A l'étape 1032 d'application de signaux datées, le sous-module 450 applique sur l'interface 26 du calculateur 12, des signaux de mesure simulés qui ont été générés en sortie des modules de simulation de la réponse des capteurs, 320, 330, et dont la date est compatible avec l'instant logique courant.

A l'étape 1034 d'émission du signal de contrôle de l'horloge du calculateur, le sous-module 450 applique un signal de contrôle propre à synchroniser l'horloge 24 du calculateur 12 pour que celui-ci reprenne l'exécution de l'algorithme 10.

L'exécution de l'algorithme 10 conduit alors au traitement des signaux de mesure appliqués en entrée de l'interface 26 du calculateur 12 et à l'émission de signaux de commande sur la sortie de l'interface 26 du calculateur 12.

Enfin, à l'étape 1036 de datation des signaux de commande, le sous-module 450 date les signaux de commande générés en sortie du calculateur 12 avec une date correspondant à l'instant logique courant augmenté de la durée de génération des signaux de commande par le calculateur 20. Cette durée correspond au temps de traitement du calculateur 12 entre la réception des signaux appliqués en entrée de l'interface 26 et de l'émission des signaux de commande sur l'interface 26.

Les signaux de commande ainsi datés sont stockés dans la mémoire 222 afin de pouvoir être utilisés par un module de simulation de la réponse d'un actionneur, 342 ou 344.

Une fois que toutes les actions à effectuer pour l'instant logique courant sont réalisées le procédé sort de la boucle 1015 et retourne à l'étape 1000 où le module de gestion de l'horloge 420 incrémente d'une unité l'horloge 410 pour passer à l'instant logique suivant sur le schéma 400.

Dans le présent mode de réalisation, la plateforme 110 est destinée au test du comportement d'un unique dispositif à valider. Un unique calculateur 12 est ainsi asservi par la plateforme. En variante, la plateforme permet le test simultané de N dispositifs à valider correspondant à N robots évoluant simultanément dans un même environnement, un robot constituant un acteur de l'environnement perçu par un autre robot. Pour cela, N calculateurs sont connectés à la plateforme de simulation qui comporte, par conséquent, une interface d'entrée/sortie adaptée. La plateforme comporte alors, associée à chaque dispositif à valider et au robot correspondant, une paire de modules constituée d'un module de simulation d'une réponse du ou de chaque capteur du robot et un module de simulation de la dynamique du robot.

En variante, la plateforme permet le test d'un dispositif à valider correspondant à un premier robot appelé à évoluer dans un environnement comportant un second robot. Pour cela la plateforme est adaptée pour simuler le comportement du second robot.

Dans le présent mode de réalisation, la plateforme 110 est destinée au test du comportement d'un robot équipé d'une caméra et d'un télémètre. En variante, la plateforme permet le test d'un robot équipé de n'importe quel type de capteur connu de l'homme du métier.

Dans encore une autre variante indépendante des précédentes, le dispositif à valider comporte une interface homme/machine pour l'échange de données avec un opérateur.

Il est à noter que la décomposition en modules du mode de réalisation présenté en détails est particulière à ce mode de réalisation. D'autres décompositions sont envisageables. L'homme du métier saura comment mettre en oeuvre l'invention dans un contexte comportant une autre répartition des modules de simulation.

Dans le mode de réalisation présenté en détail, le dispositif à valider comporte le calculateur qui sera effectivement implanté sur le robot. En variante, le dispositif à valider comporte un calculateur similaire à celui qui sera implanté dans le robot. Il s'agit alors de valider l'algorithme plutôt que le calculateur exécutant l'algorithme. Dans un mode de réalisation avantageux, le calculateur est simplifié. Il comporte en particulier une interface plus simple que celle du calculateur embarqué à bord du robot. Cette interface simplifiée permet l'échange des mêmes données avec la plateforme, mais reconditionnées logiciellement pour en modifier le type.

Dans la présente description, pour des raisons de clarté, un unique algorithme est exécuté par un calculateur comportant un unique processeur. L'homme du métier comprendra que la plateforme selon l'invention permet de valider tout type d'architecture logicielle et matérielle du robot : plusieurs algorithmes exécutés simultanément sur une ou plusieurs partition de la couche matérielle du calculateur du robot ; plusieurs processeurs fonctionnant en parallèle ; une architecture répartie de l'algorithme à valider, etc.

De préférence, la plateforme selon l'invention prend la forme d'un boîtier unique présentant les connexions adaptées pour l'asservissement d'un ou plusieurs dispositifs à valider et, avantageusement, pour la connexion d'un moyen d'interface permettant à un utilisateur de configurer la plateforme et de collecter les données d'un test virtuel.

La plateforme de simulation constitue un outil de test pratique, réaliste et rapide. Elle facilite avantageusement le prototypage de l'architecture matérielle et logicielle d'un robot (calculateurs, capteurs, actionneurs, etc.) à partir d'un cahier des charges.

## Revendications

1. Plateforme de simulation (110) pour la validation d'un dispositif comportant un calculateur (12) programmé pour exécuter un algorithme (10), ledit dispositif étant destiné à être embarqué à bord d'un robot et à être connecté à un capteur (30, 32) du robot pour recevoir un signal de mesure et à un actionneur (40, 46) du robot pour lui transmettre un signal de commande, la plateforme étant destinée à être connectée au calculateur et comportant un moyen de calcul propre à exécuter les instructions d'un programme de simulation (300) comportant :
- un module de configuration d'un environnement en trois dimensions (310), pour créer un environnement virtuel en trois dimensions ;
- un module de simulation d'une réponse du capteur du robot (320, 330), conçu pour générer des données de sortie correspondant à des signaux de mesure simulés, à partir d'une modélisation du comportement du capteur du robot et de données d'entrée constituées par l'environnement virtuel créé et par des grandeurs cinématiques calculées du robot, lesdits signaux de mesure simulés étant appliqués en entrée du calculateur du dispositif ;
- un module de simulation d'une dynamique du robot (340), conçu pour calculer des grandeurs cinématiques du robot, à partir d'une modélisation de l'actionneur du robot et de données d'entrée correspondant à des paramètres dynamiques caractéristiques du robot, aux signaux de commande émis par le calculateur du dispositif et à l'environnement virtuel créé,
**caractérisée en ce que** le programme de simulation comporte, en outre, un module d'ordonnancement temporel (350) comportant :
- une horloge logique (410) délivrant l'instant logique courant ;
- un schéma d'ordonnancement (400), associant à chaque instant logique un ensemble d'actions à réaliser ;
- un sous-module d'appel d'une action de simulation (440) propre à lancer, à l'instant logique courant délivré par l'horloge logique et en fonction de l'ensemble des actions associées à cet instant logique courant par le schéma d'ordonnancement, la réalisation d'une action de simulation correspondant à l'exécution du module de simulation de la réponse du capteur ou du module de simulation d'une dynamique du robot ; et,
- un sous-module d'appel d'une action de réaction du robot (450), propre à lancer, à l'instant logique courant délivré par l'horloge logique et en fonction de l'ensemble des actions associées à cet instant logique courant par le schéma d'ordonnancement, la réalisation d'une action de réponse du robot correspondant au traitement par le calculateur du dispositif de signaux de mesure simulés appliquées en entrée du calculateur à l'instant logique courant, pour la génération de signaux de commande à l'instant logique courant.

2. Plateforme selon la revendication 1, dans laquelle le module de simulation d'une dynamique du robot (340) comporte :
- un sous-module (342, 344) de simulation de l'actionneur du robot, comportant une modélisation de l'actionneur (40, 46) du robot ; et,
- un sous-module de calcul des grandeurs cinématiques et dynamiques (346) propre à calculer des grandeurs cinématiques et dynamiques du robot à l'instant logique courant à partir des données en sortie du module de simulation de la réponse de l'actionneur du robot et des grandeurs cinématiques et dynamiques du robot à l'instant précédent.

3. Plateforme selon la revendication 1 ou 2, dans laquelle le sous-module d'appel (450) est propre à émettre un signal de contrôle adapté à destination du calculateur du dispositif, de manière à synchroniser l'horloge (24) du calculateur (12) afin de cadencer l'exécution de l'algorithme (10).

4. Plateforme selon l'une quelconque des revendications 1 à 3, comportant une interface d'entrée/sortie adaptée afin de permettre la connexion de ladite plateforme à une pluralité de dispositif à valider, chaque dispositif étant destiné à être embarqué dans un robot correspondant, la plateforme comportant, associée à chaque dispositif et, par conséquent à chaque robot, une paire de modules constituée d'un module de simulation d'une réponse d'un capteur dudit robot et un module de simulation de la dynamique dudit robot.

5. Procédé de simulation pour la validation d'un dispositif comportant un calculateur (12) programmé pour exécuter un algorithme (10), ledit dispositif étant destiné à être embarqué à bord d'un robot et à être connecté à un capteur (30, 32) du robot pour recevoir un signal de mesure et à un actionneur (40, 46) du robot pour lui transmettre un signal de commande,
**caractérisé en ce que**, ledit procédé étant mis en oeuvre sur une plateforme de simulation (110) conforme à l'une quelconque des revendications 1 à 4 connecté audit calculateur du dispositif, le procédé consiste à :
- créer un environnement virtuel en trois dimensions avec lequel interagit ledit robot ;
- simuler une réponse du capteur du robot pour générer des données de sortie correspondant à des signaux de mesure simulés, à partir d'une modélisation du comportement du capteur du robot et de données d'entrée constituées par l'environnement virtuel créé et par des grandeurs cinématiques calculées du robot, lesdits signaux de mesure simulés étant appliqués en entrée du calculateur du dispositif ;
- simuler une dynamique du robot pour calculer des grandeurs cinématiques du robot, à partir d'une modélisation de l'actionneur du robot et de données d'entrée correspondant à des paramètres dynamiques caractéristiques du robot, aux signaux de commande émis par le calculateur du dispositif et à l'environnement virtuel créé,
- ordonnancer temporellement l'appel à une action en lançant, à l'instant logique courant délivré par une horloge logique et en fonction de l'ensemble des actions associées à cet instant logique courant par un schéma d'ordonnancement, la réalisation d'une action de simulation correspondant à l'exécution du module de simulation de la réponse du capteur ou du module de simulation d'une dynamique du robot ou en lançant, à l'instant logique courant délivré par l'horloge logique et en fonction de l'ensemble des actions associées à cet instant logique courant par le schéma d'ordonnancement, la réalisation d'une action de réponse du robot correspondant au traitement par le calculateur du dispositif de signaux de mesure simulés appliquées en entrée du calculateur à l'instant logique courant, pour la génération de signaux de commande à l'instant logique courant.

6. Procédé selon la revendication 5, dans lequel le lancement d'une action de réponse du robot comporte :
- l'application en entrée du calculateur (12) d'un signal de mesure simulé dont une date est compatible avec l'instant logique courant ;
- la synchronisation de l'horloge (24) du calculateur (12) régissant l'exécution de l'algorithme (10) par l'émission à l'instant courant d'un signal de commande adapté par la plateforme à destination du calculateur ; et,
- la datation les signaux de commande générés en sortie du calculateur avec une date correspondant à l'instant logique courant augmenté du temps de traitement du calculateur (12).

## Patentansprüche

1. Simulationsplattform (110) für die Freigabeprüfung einer Vorrichtung, die einen Rechner (12) aufweist, der programmiert ist, einen Algorithmus (10) auszuführen, wobei die Vorrichtung vorgesehen ist, mit einem Roboter mitgeführt zu werden und mit einem Sensor (30, 32) des Roboters zum Empfangen eines Messsignals und mit einem Betätigungselement (40, 46) des Roboters verbunden zu werden, um ihm ein Steuersignal zu übertragen, wobei die Plattform vorgesehen ist, mit dem Rechner verbunden zu werden, und ein eigenes Berechnungsmittel zur Ausführung der Instruktionen eines Simulationsprogramms (300) aufweist, das umfasst:
- ein Modul zur Bildung einer dreidimensionalen Umgebung (310) zum Erzeugen einer virtuellen dreidimensionalen Umgebung;
- ein Modul zur Simulation einer Antwort des Sensors des Roboters (320; 330), das ausgebildet ist, Ausgangsdaten entsprechend simulierter Messsignale von einer Modellierung des Verhaltens des Sensors des Roboters und von Eingangsdaten, die von der erzeugten virtuellen Umgebung und von berechneten kinematischen Größen des Roboters gebildet werden, zu erzeugen, wobei die simulierten Messsignale eingangsseitig dem Rechner der Vorrichtung zugeführt werden;
- ein Modul zur Simulation einer Dynamik des Roboters (340), das konzipiert ist, kinematische Größen des Roboters aus einer Modellierung des Betätigungselements des Roboters und Eingangsdaten entsprechend charakteristischer dynamischer Parameter des Roboters, den von dem Rechner der Vorrichtung abgegebenen Steuersignalen und der erzeugten virtuellen Umgebung zu berechnen,
**dadurch gekennzeichnet, dass** das Simulationsprogramm außerdem ein Modul (350) einer zeitlichen Ablaufplanung aufweist, das umfasst:
- eine logische Uhr (410) die den aktuellen logischen Zeitpunkt liefert;
- ein Ablaufschema (400), das jedem logischen Zeitpunkt eine zu realisierende Aktionsgesamtheit zuordnet;
- ein Untermodul zum Aufruf einer Simulationsaktion (440), das geeignet ist, zum aktuellen, von der logischen Uhr gelieferten logischen Zeitpunkt und abhängig von der Gesamtheit der Aktionen, die von dem Ablaufschema diesem aktuellen logischen Zeitpunkt zugeordnet sind, die Realisierung einer Simulationsaktion, die einer Ausführung des Moduls zur Simulation der Antwort des Sensors oder des Moduls zur Simulation einer Dynamik des Roboters entspricht, durchzuführen und
- ein Untermodul zum Aufruf einer Reaktionsaktion des Roboters (450), das geeignet ist, zum aktuellen, von der logischen Uhr gelieferten logischen Zeitpunkt und abhängig von der Gesamtheit der Aktionen, die von dem Ablaufschema diesem aktuellen logischen Zeitpunkt zugeordnet sind, die Realisierung einer Antwortaktion des Roboters entsprechend der Verarbeitung durch den Rechner der Vorrichtung der simulierten Messsignale, die eingangsseitig dem Rechner zum aktuellen logischen Zeitpunkt eingegeben werden, für die Erzeugung von Steuersignalen zum aktuellen logischen Zeitpunkt durchzuführen.

2. Plattform nach Anspruch 1, bei der das Modul zur Simulation einer Dynamik des Roboters (340) umfasst:
- ein Untermodul (142, 344) zur Simulation des Betätigungselements des Roboters, das eine Modellierung des Betätigungselements (40, 46) des Roboters aufweist; und
- ein Untermodul zur Berechnung von kinematischen und dynamischen Größen (346), das geeignet ist, kinematische und dynamische Größen des Roboters zum aktuellen logischen Zeitpunkt aus Ausgangsdaten des Moduls zur Simulation der Antwort des Betätigungselements des Roboters und dynamischen und kinematischen Größen des Roboters zum vorhergehenden Zeitpunkt zu berechnen.

3. Plattform nach Anspruch 1 oder 2, bei der das Untermodul (450) zum Aufruf geeignet ist, ein angepasstes Steuersignal dem Rechner der Vorrichtung zu liefern, um die Uhr (24) des Rechners (12) zu synchronisieren, damit die Ausführung des Algorithmus (10) getaktet wird.

4. Plattform nach einem beliebigen der Ansprüche 1 bis 3, eine angepasste Eingangs/Ausgangsschnittstelle umfassend, die angepasst ist, die Verbindung der Plattform mit einer Mehrzahl von zu validierenden Vorrichtungen zu ermöglichen, wobei jede Vorrichtung vorgesehen ist, in einem entsprechenden Roboter mitgeführt zu werden, wobei die Plattform, zugeordnet zu jeder Vorrichtung und folglich zu jedem Roboter, ein Modulpaar aufweist, das aus einem Modul zur Simulation einer Antwort des Sensors des Roboters und einem Modul zur Simulation der Dynamik des Roboters gebildet ist.

5. Simulationsverfahren für die Freigabeprüfung einer Vorrichtung, die einen Rechner (12) aufweist, der programmiert ist, einen Algorithmus (10) auszuführen, wobei die Vorrichtung vorgesehen ist, mit einem Roboter mitgeführt zu werden und mit einem Sensor (30, 32) des Roboters zum Empfangen eines Messsignals und mit einem Betätigungselement (40, 46) des Roboters verbunden zu werden, um ihm ein Steuersignal zu übertragen
**dadurch gekennzeichnet, dass** das Verfahren mit einer Simulationsplattform (110) nach einem beliebigen der Ansprüche 1 bis 4 durchgeführt wird, die mit dem Rechner der Vorrichtung verbunden ist, wobei das Verfahren darin besteht:
- eine virtuelle dreidimensionale Umgebung zu erzeugen, mit der der Roboter interagiert;
- eine Antwort des Sensors des Roboters zu simulieren, um Ausgangsdaten entsprechend simulierter Messsignale aus einer Modellierung des Verhaltens des Sensors des Roboters und aus Eingangsdaten, die von der erzeugten virtuellen Umgebung und berechneten kinematischen Größen des Roboters gebildet werden, zu erzeugen, wobei die simulierten Messsignale eingangsseitig dem Rechner der Vorrichtung zugeführt werden;
- eine Dynamik des Roboters zu simulieren, um kinematische Größen des Roboters aus einer Modellierung des Betätigungselements des Roboters und Eingangsdaten entsprechend charakteristischer dynamischer Parameter des Roboters, den Steuersignalen, die von dem Rechner der Vorrichtung ausgegeben werden, und der erzeugten virtuellen Umgebung, zu berechnen,
- zeitlich den Aufruf einer Aktion zu planen, indem zum von der logischen Uhr gelieferten aktuellen logischen Zeitpunkt und abhängig von der Gesamtheit der Aktionen, die von dem Ablaufschema diesem aktuellen logischen Zeitpunkt zugeordnet sind, die Realisierung einer Simulationsaktion entsprechend der Ausführung des Moduls zur Stimulation der Antwort des Sensors oder des Moduls zur Simulation einer Dynamik des Roboters durchgeführt wird oder indem zum von der logischen Uhr gelieferten aktuellen logischen Zeitpunkt und abhängig von der Gesamtheit der Aktionen, die von dem Ablaufschema diesem aktuellen logischen Zeitpunkt zugeordnet sind, die Realisierung einer Aktion der Antwort des Roboters entsprechend der Verarbeitung durch den Rechner der Vorrichtung von simulierten Messsignalen, die eingangsseitig dem Rechner zum aktuellen logischen Zeitpunktzugeführt werden, für die Erzeugung von Steuersignalen zum aktuellen logischen Zeitpunkt durchgeführt wird.

6. Verfahren nach Anspruch 5, bei dem die Durchführung einer Aktion der Antwort des Roboters umfasst:
- dem Rechner (12) eingangsseitig ein simuliertes Messsignal zuzuführen, dessen Datum kompatibel mit dem aktuellen logischen Zeitpunkt ist;
- die Synchronisierung der Uhr (24) des Rechners (12), der die Ausführung des Algorithmus (10) bestimmt, durch Ausgabe eines adaptierten Steuersignals von der Plattform zu dem Rechner zum aktuellen Zeitpunkt; und
- die Datierung der am Ausgang des Rechners erzeugten Steuersignale mit einem Datum entsprechend dem aktuellen logischen Zeitpunkt, erhöht um die Verarbeitungszeit des Rechners (12).

## Claims

1. A simulation platform (110) for validating a device including a programmed computer (12) for executing an algorithm (10), said device being intended to be loaded on board a robot and to be connected to a sensor (30, 32) of the robot for receiving a measurement signal and to an actuator (40, 46) of the robot for transmitting to it a control signal, the platform being intended to be connected to the computer and including a computing means able to execute the instructions of a simulation program (300) including:
- a module for configuring a three-dimensional environment (310), for generating a virtual three-dimensional environment;
- a module for simulating a response of the sensor of the robot (320, 330), designed for generating output data corresponding to simulated measurement signals, from modeling of the behavior of the sensor of the robot and from input data formed by the generated virtual environment and by computed cinematic quantities of the robot, said simulated measurement signals being applied at the input of the computer of the device;
- a module for simulating dynamics of the robot (340), designed for computing cinematic quantities of the robot, from modeling of the actuator of the robot and from input data corresponding to characteristic dynamic parameters of the robot, to control signals transmitted by the computer of the device and to the generated virtual environment,
**characterized in that** the simulation program further includes a module for ordering in time (350), including:
- a logic clock (410) delivering the current logic instant;
- an ordering scheme (400), associating with each logic instant a set of actions to be carried out;
- a sub-module for calling upon a simulation action (440) able to start, at the current logic instant delivered by the logic clock and depending on the whole of the actions associated with this current logic instant by the ordering scheme, the carrying out of a simulation action corresponding to the execution of the module for simulating the response of the sensor or of the module for simulating dynamics of a robot; and,
- a sub-module for calling upon an action of reaction of the robot (450), able to start, at the current logic instant delivered by the logic clock and depending on the whole of the actions associated with this current logic instant by the ordering scheme, the carrying out of a response action of the robot corresponding to the processing by the computer of the device, of simulated measurement signals applied at the input of the computer at the current logic instant, for generating control signals at the current logic instant.

2. The platform according to claim 1, wherein the module for simulating dynamics of the robot (340) includes:
- a sub-module (342, 344) for simulating the actuator of the robot, including modeling of the actuator (40, 46) of the robot; and,
- a sub-module for computing cinematic and dynamic quantities (346) able to compute cinematic and dynamic quantities of the robot at the current logic instant from data at the output of the module for simulating the response of the actuator of the robot and from cinematic and dynamic quantities of the robot at the previous instant.

3. The platform according to claim 1 or 2, wherein the calling sub-module (450) is able to transmit a suitable control signal intended for the computer of the device, so as to synchronize the clock (24) of the computer (12) in order to clock the execution of the algorithm (10).

4. The platform according to any of claims 1 to 3, including a suitable input/output interface in order to allow connection of said platform to a plurality of devices to be validated, each device being intended to be on board a corresponding robot, the platform including, associated with each device, and therefore with each robot, a pair of modules consisting of a module for simulating a response of a sensor of said robot and a module for simulating the dynamics of said robot.

5. A simulation method for validating a device including a programmed computer (12) for executing an algorithm (10), said device being intended to be loaded on board a robot and to be connected to a sensor (30, 32) of the robot for receiving a measurement signal and to an actuator (40, 46) of the robot for transmitting to it a control signal,
characterized that, as said method is applied on a simulation platform (110) according to any of claims 1 to 4, connected to said computer of the device, the method consists of:
- generating a virtual three-dimensional environment with which interacts said robot;
- simulating a response of the sensor of the robot for generating output data corresponding to simulated measurement signals, from modelling of the behaviour of the sensor of the robot and from input data formed by the generated virtual environment and by computed cinematic quantities of the robot, said simulated measurement signals being applied at the input of the computer of the device;
- simulating dynamics of the robot for computing cinematic quantities of the robot, from modeling of the actuator of the robot and from input data corresponding to characteristic dynamic parameters of the robot, to control signals transmitted by the computer of the device and to the generated virtual environment,
- ordering in time the call to an action by starting, at the current logic instant delivered by a logic clock and depending on the whole of the actions associated with this current logic instant by an ordering scheme, the carrying out of a simulation action corresponding to the execution of the module for simulating the response of the sensor or of the module for simulating dynamics of the robot or by starting, at the current logic instant delivered by the logic clock and depending on the whole of the actions associated with this current logic instant by the ordering scheme, the carrying out of a response action of the robot corresponding to the processing by the computer of the device, of simulated measurement signals applied at the input of the computer at the current logic instant, for generating control signals at the current logic instant.

6. The method according to claim 5, wherein the starting of a response action of the robot includes:
- applying at the input of the computer (12) a simulated measurement signal, one date of which is compatible with the current logic instant;
- synchronizing the clock (24) of the computer (12) governing execution of the algorithm (10) by transmitting at the current instant a suitable control signal by the platform to the computer; and,
- dating the control signals generated at the output of the computer with a date corresponding to the current logic instant increased by the processing time of the computer (12).
